## Europäisches Patentamt

## European Patent Office

## Office européen des brevets

(19)

(11) Numéro de publication: **0 130 099 B1**

(12)
# FASCICULE DE BREVET EUROPEEN

(45) Date de publication du fascicule du brevet:
**14.06.89**

(51) Int. Cl.⁴: **G 01 T 1/178**

(21) Numéro de dépôt: **84401104.9**

(22) Date de dépôt: **29.05.84**

(54) **Procédé pour déterminer l'activité volumique et estimer la masse de plutonium contenu dans des déchets et dispositif pour la mise en oeuvre de ce procédé.**

(30) Priorité: **01.06.83 FR 8309050**

(43) Date de publication de la demande:
**02.01.85 Bulletin 85/1**

(45) Mention de la délivrance du brevet:
**14.06.89 Bulletin 89/24**

(84) Etats contractants désignés:
**BE CH DE FR GB IT LI NL SE**

(56) Documents cités:
**EP-A- 0 042 099**
**US-A- 3 222 521**

**NUCL. SAFEGUARDS TECHNOLOGY, vol. II, 2-6 octobre 1978, pages 65-77, International Atomic Energy Agency, Vienna, AT; M. DE CAROLIS et al.: "Non-destructive assay of large quantities of plutonium"**
**NUCLEAR INSTRUMENTS AND METHODS, vol. 176, 1980, pages 555-565, North-Holland Publishing Company, Amsterdam, NL; J.E. SWANSEN et al.: "Shift-register coincidence electronics system for thermal neutron counters"**

(73) Titulaire: **COMMISSARIAT A L'ENERGIE ATOMIQUE, 31/33, rue de la Fédération, F-75015 Paris (FR)**

(72) Inventeur: **Gouguet, Jackie, Lotissement Bellevue, F-50460 Urville-Nacqueville (FR)**

(74) Mandataire: **Mongrédien, André et al, c/o BREVATOME 25, rue de Ponthieu, F-75008 Paris (FR)**

## Description

L'invention concerne un procédé pour déterminer l'activité et estimer la masse de plutonium contenu dans des déchets et un dispositif pour la mise en œuvre de ce procédé.

Elle s'applique notamment à la détermination de l'activité volumique et de l'activité massique et à l'estimation de la masse de plutonium dans des déchets radioactifs contenus dans un récipient.

Dans la suite de la description, les références notées entre parenthèses renvoient à une bibliographie située à la fin de la description.

Les déchets technologiques provenant d'usines de retraitement de combustibles irradiés dans les réacteurs nucléaires par exemple, contaminés par du plutonium sont généralement conditionnés dans des fûts métalliques de 100 ou 200 litres. Parfois, des conteneurs de grandes dimensions sont utilisés pour le conditionnement des déchets volumineux et encombrants. L'emploi de conteneurs de grandes dimensions (1,7 × 1,7 × 1,7 m) tend actuellement à se répandre pour le conditionnement de déchets technologiques non compactables et tout particulièrement pour ceux résultant d'opérations de démantèlement.

Les conteneurs ou fûts de déchets contaminés ne sont acceptés sur les sites de stockage, pour stockage définitif ou entreposage, que si leurs activités volumiques ou massiques sont inférieures à certaines limites. En effet, deux concepts sont actuellement utilisés pour définir les limites d'acceptabilité au niveau des sites de stockage aussi bien pour le stockage définitif que pour l'entreposage de ces fûts ou conteneurs de déchets. Ces deux concepts sont, soit l'activité massique en Curies par tonne de déchets (Ci.T$^{-1}$), soit l'activité volumique. Cette activité volumique s'exprime, dans ce dernier cas, non pas en curies par mètre cube (Ci.m$^{-3}$), comme l'on pourrait s'y attendre, mais par convention, en nombre de concentrations maximales admissibles (CMA); ce nombre de CMA est obtenu en divisant l'activité volumique en Ci.m$^{-3}$, par la valeur de la CMA qui s'exprime, elle aussi, en Ci.m$^{-3}$. Les valeurs des CMA sont celles définies pour l'eau, pour des composés sous formes solubles et établies pour une personne directement affectée à des travaux sous rayonnements, qui serait exposée de façon continue à raison de 168 heures par semaine (1). Le choix de ce mode d'expression de l'activité volumique s'explique par le fait que le risque pris en considération pour de tels sites de stockage est un risque de contamination des eaux (ruisseaux, nappe phréatique) résultant des phénomènes de lixiviation des déchets, ce risque de contamination des eaux s'appréciant habituellement à partir de la notion d'activité volumique en nombre de CMA.

C'est ainsi qu'en France, dans l'état actuel des choses, pour des déchets contaminés par des radionucléides émetteurs alpha de période radioactive supérieure à 50 ans, la limite d'acceptabilité en vigueur pour un stockage définitif est de 2.10$^4$ CMA. Il est cependant envisagé d'utiliser, dans un avenir tout proche, le concept d'activité massique en Ci.T$^{-1}$, pour exprimer la limite d'acceptabilité d'un stockage, comme cela se fait aux USA, par exemple.

Dans le cas de déchets contaminés par du plutonium envisagé ci-dessus, les radionucléides émetteurs alpha de période radioactive supérieure à 50 ans sont les isotopes de nombre de masse 238, 239, 240, 242 du plutonium et un isotope de l'américium de nombre de masse 241, radionucléides également émetteur alpha de période radioactive supérieure à 50 ans, descendant de l'isotope de nombre de masse 241 du plutonium (ce dernier isotope de plutonium n'étant pas pris en compte habituellement, compte tenu que sa période radioactive est inférieure à 50 ans).

Si pour l'acceptation ou non des déchets sur sites de stockage, la connaissance de l'activité massique ou volumique des fûts ou conteneurs de déchets est suffisante, il n'en reste pas moins que l'estimation des masses de plutonium, dans ces mêmes fûts ou conteneurs, s'avère, la plupart du temps, nécessaire pour une saine gestion des bilans de plutonium et pour évaluer, pour des raisons de sûreté, le risque de criticité des stockages réservés aux déchets qui, précisément, en raison de leur trop forte activité, ne peuvent être acceptés sur les sites habituels de stockage.

Le producteur de déchets contaminés doit donc évaluer conformément aux règles en vigueur dans son pays, soit l'activité volumique, exprimée en nombre de CMA, dans les fûts ou conteneurs de déchets technologiques contaminés par du plutonium, soit l'activité massique en Ci.T$^{-1}$ et estimer les masses correspondantes de plutonium.

Cette double obligation est résolue par différents procédés et dispositifs connus qui vont être décrits ci-après, pour mieux comprendre les inconvénients qu'ils présentent et les avantages que l'invention procure.

### 1. – LES INSTALLATIONS DE COMPTAGE GAMMA:

Ce genre d'installation, très ancienne, mais encore utilisée, est conçue pour détecter le plutonium 239 par les rayonnements gamma qu'il émet, généralement le rayonnement gamma de 380 keV. Ce rayonnement était jugé jusqu'à présent suffisamment énergétique pour traverser des déchets contenus dans un fût, sans trop d'absorption pour atteindre la sonde de mesure. Afin que l'exploration soit aussi complète que possible, le fût est monté sur un plateau mobile tournant à environ une dizaine de tours par minute. Pendant ce temps, la sonde de mesure (scintillateur NaI) se déplace verticalement en une dizaine de minutes, sur toute la hauteur du fût, à une certaine distance de ce dernier.

Lorsque ce type d'installation a été conçu, le plutonium était issu de combustibles très peu irradiés et l'on considérait, en conséquence, qu'il n'était constitué pratiquement que d'isotope 239; le seul critère de gestion des déchets était la quantité de plutonium 239 et les installations étaient étalonnées en conséquence.

Ces installations présentent des défauts importants:

– l'hétérogénéité physique des matériaux constituant les «déchets» (densité variable, d'où phénomènes d'autoabsorption variables dans toute la géométrie du fût; connaissance du degré de remplissage du fût nécessaire,...)

– l'hétérogénéité de la répartition spatiale de la contamination des déchets dans le fût,

– l'influence des rayonnements gamma de fortes énergies provenant de produits de fission résiduels ou d'autres isotopes de plutonium; ces rayonnements gamma plus énergétiques donnent naissance par effet Compton à des rayonnements gamma d'énergie équivalente à celle des rayonnements gamma propres au plutonium 239 que l'on veut détecter, ce qui peut occasionner un comptage parasite non négligeable.

Ces défauts sont intrinsèques à la détection des rayonnements gamma. Il existe d'autres défauts qui sont dus à la nature même du plutonium actuellement produit industriellement: le plutonium est en général obtenu à partir de combustibles très irradiés; il ne peut plus être considéré, en pratique, que comme constitué du seul isotope 239. Les autres isotopes 238, 240, 241, 242 et leurs descendants éventuels, sont alors nécessairement à prendre en considération, tant par leurs masses que par leurs activités respectives, ces dernières pouvant dépasser largement celle du plutonium 239.

A priori, il serait possible d'envisager de détecter, chacun d'entre eux, par un gamma d'énergie représentative de chaque isotope, selon le même principe que celui exposé précédemment pour le gamma de 380 keV du plutonium 239, d'autant qu'à notre époque des détecteurs «Germanium Lithium» remplacent avantageusement de ce point de vue les détecteurs NaI et permettent d'effectuer des spectrométries gamma à haute résolution.

En fait, même avec les progrès des détecteurs actuellement réalisés, il est jugé impossible avec des installations de ce type de compenser tous les défauts signalés plus haut.

Au contraire, ces défauts prennent d'autant plus d'importance qu'il s'agit non plus de détecter un seul isotope, mais d'en détecter plusieurs.

Les installations de comptage gamma ne peuvent pas, actuellement résoudre valablement la double obligation de mesure d'activité volumique ou massique et de mesure de masse du plutonium.

## 2. – LES INSTALLATIONS DE SPECTROMETRIE GAMMA ET DE COMPTAGE NEUTRONIQUE AVEC DISCRIMINATION DES NEUTRONS DE FISSION DES NEUTRONS DE REACTION (α, n).

Comme indiqué, les installations de spectrométrie gamma, aussi performantes soient-elles, ne peuvent pas, à elles seules, répondre aux obligations mentionnées plus haut. Il est donc apparu nécessaire de concevoir d'autres installations fournissant des informations complémentaires et notamment des installations de comptage neutronique.

Le plutonium émet en effet non seulement des gammas, mais aussi des neutrons. Des installations de comptage neutronique peuvent fournir des informations complémentaires.

Ces neutrons peuvent avoir différentes origines:

– les fissions spontanées des isotopes «pairs» du plutonium (nombre de masses 238, 240, 242), qui donnent naissance en moyenne à 2,15 neutrons par fission environ (2).

– les réactions (α, n) provoquées par les particules alpha des isotopes du plutonium sur les noyaux de certains isotopes d'éléments légers, en particulier de ceux entrant dans la composition des différentes formes chimiques sous lesquelles on a l'habitude de manipuler le plutonium,

– les fissions provoquées (effet de multiplication) par les neutrons des deux catégories précédentes.

Si l'on admet que les neutrons de cette dernière catégorie peuvent être négligés (ce qui n'est pas toujours le cas, comme on le verra plus loin) et si l'on peut discriminer les neutrons de fission spontanées, des neutrons de réactions (α, n), le taux de comptage correspondant aux neutrons de fissions spontanées, est proportionnel à la somme des masses des isotopes pairs, pondérées par leurs débits d'émission neutronique spécifique respectifs.

L'information complémentaire recherchée réside dans la relation qui lie le taux de comptage neutronique, dû aux fissions spontanées, aux quantités respectives de ces trois isotopes «pairs», ou ce qui revient au même, dans la relation qui lie le nombre de fissions spontanées aux quantités respectives des trois isotopes «pairs».

De telles méthodes de comptage neutronique, qui utilisent une émission neutronique non provoquée par des moyens extérieurs, sont qualifiées de «méthodes passives».

Il existe, en effet, par opposition, des «méthodes dites actives». Ces méthodes peuvent également fournir une information complémentaire. Elles mettent en œuvre une source extérieure de neutrons. Le principe de ces méthodes actives réside dans le fait que les isotopes «impairs» du plutonium, (nombre de masses 239 et 241), sont fissiles: si l'on bombarde les noyaux de ces isotopes par des neutrons issus, par exemple, d'une source de Californium 252, ou émis par un générateur, il se produit des fissions.

Ces fissions donnent naissance à des neutrons et des rayonnements gamma de fission instantanée et à des neutrons de fission retardés.

Le comptage de ces rayonnements supplémentaires peut fournir l'information recherchée.

Ainsi, le taux de comptage des neutrons retardés est proportionnel à la somme des masses des isotopes «impairs» pondérées par des facteurs adéquats.

L'information complémentaire alors recherchée réside dans la relation qui lie le taux de comptage des neutrons retardés aux quantités respectives des deux isotopes «impairs».

Nous allons maintenant décrire les principales installations connues de mesure:

a) – Les installations de spectrométrie gamma ressemblent dans leur principe aux installations de comptage gamma. L'utilisation d'un détecteur Germanium-Lithium permet d'effectuer de la spectrométrie gamma à haute résolution.

Afin d'obtenir une bonne exploration du contenu d'un fût, ce détecteur décrit, pendant tout le comptage, une génératrice du fût. Ce dernier est animé, pendant ce temps là, d'un mouvement de rotation transmis par une table tournante.

Le spectre gamma obtenu permet de déterminer des activités, ou des rapports d'activités des isotopes. Ces données permettent donc de connaître les masses, ou les rapports de masses de ces isotopes. En réalité, ces données ne peuvent être obtenues que s'il n'y a pas d'interférences entre des rayonnements gamma ayant les mêmes énergies, mais ayant des origines différentes.

b) – Les installations de comptage neutronique des fissions spontanées, utilisant une méthode dite passive:

Ces installations destinées au comptage neutronique comportent plusieurs dizaines de détecteurs de neutrons, généralement à $^3$He, par exemple 18, 24 ou 32 détecteurs. Ces détecteurs sont disposés, verticalement, tout autour du fût contenant des déchets, sur une ou plusieurs rangées, dans une couronne cylindrique en polythène servant de ralentisseur.

Cette couronne cylindrique comporte:

– une fente destinée à la circulation verticale du détecteur «Germanium-Lithium», dans son collimateur en plomb, décrit précédemment,

– éventuellement un ou plusieurs canaux pour la circulation d'une source de Californium 252, dans les installations envisagées pour mettre en œuvre également la méthode active qui sera décrite plus loin.

Ces installations doivent permettre de discriminer les neutrons de fissions spontanées, des neutrons de réactions (α, n).

Pour cela, il est nécessaire d'utiliser une propriété qui différencie les neutrons selon leur origine:

– une fission spontanée donne naissance à plusieurs neutrons (processus multiple) émis simultanément,

– une réaction (α, n) donne naissance à un seul neutron (processus simple).

Pour mettre en évidence le processus d'émission multiple qui caractérise une fission spontanée, on intercale, entre la source de neutrons et le détecteur, un milieu ralentisseur, (en l'occurrence les déchets eux mêmes, plus le polythène entourant le détecteur). Les neutrons émis simultanément lors d'une même fission subissent des chocs sur les noyaux du milieu ralentisseur et parcourent ainsi des trajectoires différentes avant d'être détectés. Leur temps de vie dans le milieu ralentisseur est différent: ces neutrons émis simultanément sont alors détectés séparément sous forme d'impulsions distinctes, en corrélation dans le temps.

Il reste alors à distinguer ces impulsions distinctes, mais corrélées dans le temps, des impulsions isolées correspondantes aux neutrons de réaction (α, n). Pour cela diverses méthodes ont été utilisées. Elles font intervenir des développements importants de statistique et sont chronologiquement de plus en plus complexes.

Des dispositifs «à temps mort» sont à la base de ces méthodes:

Si deux comptages sont effectués durant le même temps sur deux voies en parallèle, l'une comportant un temps mort négligeable, l'autre comportant un temps mort grand devant le temps de vie du neutron dans le modérateur, la différence des taux de comptage des deux voies est proportionnelle au taux des fissions spontanées.

La probabilité de compter, dans cet intervalle de temps, des «coïncidences fortuites» (impulsions successives n'ayant pas pour origine des neutrons d'une même fission) est cependant non négligeable. Aussi, les «méthodes des coïncidences» cherchent-elles à distinguer les «coïncidences vraies» (impulsions successives ayant pour origine des neutrons d'une même fission), des coïncidence fortuites. Pour cela, la détection d'un neutron provoque le déclenchement de deux intervalles de comptage de durées égales, mais décalés dans le temps de telle sorte qu'un neutron corrélé avec le premier neutron initiateur n'ait pratiquement aucune probabilité d'être détecté dans le second intervalle; comme précédemment, la différence des taux de comptage (coïncidences vraies et fortuites) – (coïncidences fortuites) est considérée comme proportionnelle aux taux des fissions spontanées.

En fait, ce n'est plus le cas dès que les débits d'émissions neutroniques deviennent élevés et la courbe de réponse en fonction de la masse devient vite non linéaire (2), (3), (4). Les intervalles de comptage sont en réalité des temps morts non négligeables durant lesquels une impulsion ne peut déclencher une autre séquence. Aussi a-t-il fallu perfectionner encore cette méthode des coïncidences; d'où l'apparition de «systèmes à temps morts variables» et de «systèmes à registres à décalages».

Dans les systèmes à registres à décalages, chaque impulsion déclenche une séquence; les temps morts s'en trouvent réduits et une meilleure linéarité de réponse est obtenue en fonction de la masse (2), (5), (pour des débits d'émissions neutroniques élevés). Cette dernière méthode permet de faire une analyse fine des fonctions de distribution des diverses émissions neutroniques, si bien qu'il est également envisagé de la perfectionner encore, si cela est possible, pour effectuer éventuellement des corrections de l'effet de multiplication (fissions provoquées par les neutrons d'autres origines) (6).

c) – Les installations de comptage neutronique des fissions «provoquées» ou «induites», utilisant une méthode dite active:

Les méthodes actives utilisent une source extérieure de neutrons pour provoquer des fissions des noyaux fissiles que sont ceux de $^{239}$Pu et $^{241}$Pu.

Ces sources de neutrons peuvent être un générateur, une source de photoneutrons Sb-Be (9), mais il semble que les sources de $^{252}$Cf soient le plus souvent envisagées. Ces fissions supplémentaires donnent naissance à des gammas et à des neutrons instantanés ainsi qu'à des neutrons retardés (8), (9). Si l'on désire exploiter cette émission de neutrons retardés, on effectue des irradiations cycliques des fûts de déchets intercalées de périodes de comptage des neutrons retardés; la source de Californium se déplace, par un système pneumatique, de son stockage, aux positions d'irradiation, dans un ou plusieurs canaux de la couronne cylindrique réservés à cet usage. Cette interrogation active, terme fréquemment employé, peut nécessiter une vingtaine de cycles et durer près de vingt minutes (8). Ces méthodes sont le plus souvent considérées comme des méthodes complémentaires des méthodes passives.

D'une façon générale, les installations qui utilisent des méthodes passives ou actives sont complexes et coûteuses. Les systèmes de comptage neutronique actifs et/ou passifs n'interviennent qu'en complément de la spectrométrie gamma qui reste toujours entachée des incertitudes liées à l'hétérogénéïté physique des déchets et à l'hétérogénéïté de la répartition spatiale de la contamination, ce dernier point intervenant également dans les systèmes de comptage neutronique passifs ou actifs.

En réalité, la spectrométrie gamma elle-même s'avère avoir un rôle beaucoup plus limité dans la détermination de la composition isotopique que ne laisseraient entrevoir les principes exposés précédemment; il arrive que la composition isotopique soit supposée approximativement connue ou même connue.

Ces installations nécessitent des temps de mesures élevés; elles sont complexes, coûteuses, et ont une adaptabilité très limitée: les mesures passives (gamma et neutron) nécessitent vingt à trente minutes (10), les mesures actives près de vingt minutes également (8).

Elles font intervenir des disciplines techniques différentes et des spécialistes qui, souvent, ne sont pas sur place.

Les coûts d'investissement sont très importants pour les moyens mécaniques et pour la détection-traitement des informations. Les coûts d'exploitation sont également importants compte tenu de la nécessité d'employer un personnel hautement qualifié et du temps que nécessitent les mesures. Les coûts d'entretien sont en rapport avec la complexité de ces installations.

De plus, ces installations sont fixes et elles ne sont conçues à l'origine que pour des fûts de 100 litres et/ou de 200 litres. Des déchets volumineux, ou stockés dans des conteneurs de plus grandes dimensions ne peuvent pas y être mesurés.

Enfin, ces installations doivent tenir compte de l'hétérogénéïté de densité et de l'hétérogénéïté de répartition spatiale de la contamination des déchets contenus dans un fût:

— l'hétérogénéïté de densité intervient dès que l'on détecte des rayonnements gamma ou que l'on désire faire de la spectrométrie gamma. Il est alors nécessaire de déterminer une densité apparente par pesée du fût, ce qui nécessite de connaître la hauteur de remplissage du fût (10), et de trier les déchets de façon à n'avoir que des natures de matériaux contaminés homogènes, dans la mesure du possible (cellulose, plastique, verre, métal, autres) (10). Il convient également de tenir compte du fait que les performances des installations de spectrométrie gamma diminuent considérablement au fur et à mesure que la densité apparente augmente, à tel point que les performances de certaines installations ne sont établies que pour des densités apparentes inférieures à 0,3. Il faut aussi tenir compte des coefficients de correction d'atténuation et d'autoabsorption dans le traitement des informations. Cette influence d'hétérogénéïté de densité peut se faire sentir également dans la détection neutron (choix du temps mort).

— l'hétérogénéïté dans la répartition spatiale des sources radioactives agit aussi bien dans la détection gamma que dans la détection des neutrons et pour cette dernière, aussi bien dans la méthode passive que dans la méthode active, ce qui se traduit par des incertitudes non négligeables: dans la détection gamma, l'incertitude provenant du positionnement de la source radioactive est évaluée à 55%, (3), pour des fûts de 100 litres, par contre, avec un collimateur convenable, cette incertitude, pour des fûts de 225 litres peut être ramenée à ± 10%, pour une densité apparente du fût de 0,3, pour une énergie des rayonnements gamma de 400 KeV (11). En fait, des énergies plus faibles sont souvent utilisées (10) et l'incertitude est alors beaucoup plus importante. Dans la détection des neutrons par une méthode passive, l'incertitude est chiffrée à 40%, pour une source ponctuelle contenue dans le plan médian d'un fût de 225 litres, selon qu'elle est placée au centre du fût ou à sa périphérie (11). Dans la détection des neutrons par une méthode active, de très importantes variations sont obtenues dans la réponse des détecteurs en fonction de la position d'une source de matière fissile sur l'axe d'un fût, pour une source «active» unique ponctuelle du type californium 252 (11). Une certaine amélioration de ce système consiste à utiliser une position supérieure et une position inférieure d'irradiations cycliques (8).

Ces quelques exemples montrent quelle est l'importance de l'incertitude liée à l'hétérogénéïté de répartition spatiale de la source, c'est ce qui explique que les utilisateurs de ces systèmes cherchent à mettre au point et à introduire, au niveau du traitement des informations, des programmes de positionnement de sources, souvent très compliqués.

Dans la détection gamma, les éléments qui peuvent permettre de diminuer les incertitudes sont la collimation du détecteur et l'utilisation d'une table tournante mettant le fût en rotation.

Dans la détection des neutrons, le fût est entouré d'une (ou plusieurs rangées) de plusieurs dizaines de détecteurs répartis régulièrement autour du fût afin de pouvoir enregistrer les coïncidences de deux neutrons issus d'une même fission. La rotation du fût n'amène donc pratiquement rien dans ce cas et l'incertitude est élevée. Les détecteurs sont disposés au plus près du fût de façon à réduire leur nombre déjà fort important, ce qui est un inconvénient notable. Il est connu en effet que les différences de comptage entre une source uniformément répartie et une source ponctuelle placée au centre d'un conteneur, sont maximales au contact du conteneur et diminuent lorsque l'on s'éloigne du conteneur.

Ces constatations peuvent s'expliquer en tenant compte du fait que la fluence des rayonnements au niveau d'un détecteur comporte deux composantes: une composante géométrique liée à l'angle solide sous lequel la source voit la partie détectrice, et une composante physique d'atténuation qui se fait d'autant plus sentir que les rayonnements sont moins pénétrants.

Dans le cas présent, le fait que les détecteurs soient au plus près du fût, constitue un élément défavorable qui accroît l'incertitude liée à l'hétérogénéïté de la répartition spatiale de la source, aussi bien pour la composante géométrique que pour la composante physique d'atténuation.

Un autre élément défavorable en spectrométrie gamma résulte de l'influence des rayonnements gamma parasites: les gammas parasites ont pour origines des produits de fission résiduels ou les descendants du plutonium 241. Même avec la haute résolution qu'apportent les détecteurs «germanium-lithium», les descendants du plutonium 241 sont à prendre en considération (11) dans le choix des énergies, en tenant compte du vieillissement possible du plutonium.

Il n'y a pas lieu d'insister sur le fait que la spectrométrie gamma devient pratiquement exclue pour du plutonium qui serait en plus mélangé à des produits de fission d'activité non négligeable. En réalité, on constate que la spectrométrie gamma ne joue pas tout le rôle auquel on serait en droit de s'attendre.

Dans la référence bibliographique (11), on suppose la composition isotopique du plutonium connue, dans la référence (10), à partir du rapport des «pics» du gamma de 203,6 KeV du $^{239}$Pu et du gamma de 208,0 KeV de l'$^{237}$U (descendant en équilibre du $^{241}$Pu), donnant le rapport isotopique $^{241}$Pu/$^{239}$Pu, on évalue le pourcentage d'isotope 239 en se référant à des abaques établis empiriquement à partir de résultats d'analyses isotopiques des différents plutonium rencontrés. Il convient de remarquer que, si ces énergies sont presque identiques, ce qui peut être intéressant sur le plan atténuation et autoabsorption, elles sont faibles, ce qui n'est pas très favorable, en ce qui concerne l'incertitude liée à l'hétérogénéïté spatiale de la source.

Ce même rapport isotopique $^{241}$Pu/$^{239}$Pu sert également à déterminer à partir d'un abaque empirique ce qui est appelé le «pourcentage d'émission neutronique équivalent aux isotopes pairs». En conclusion, dans ce cas précis, la spectrométrie gamma ne s'est limitée directement qu'à la détermination du rapport isotopique $^{241}$Pu/$^{239}$Pu et

non à la détermination de la composition isotopique réelle. Cette spectrométrie gamma devient impossible par ailleurs pour des fûts très «irradiants».

Un élément défavorable du comptage neutronique résulte de la multiplication des neutrons: on sait que les neutrons émis par un fût de déchets ont trois origines: les réactions ($\alpha$, n), les fissions spontanées, et les fissions provoquées produites par les neutrons précédents: c'est l'effet de multiplication. Cet effet de multiplication est fonction du coefficient Keff de l'ensemble du système détection-fûts de déchets (Keff est le coefficient de multiplication des neutrons dus aux fissions provoquées, encore appelées induites). Les neutrons de fissions provoquées ne se distinguent pas dans l'état actuel de la technique des neutrons de fission spontanées. Aussi, dans les systèmes habituels utilisant la méthode passive, les fissions provoquées sont-elles comptées comme des fissions spontanées. Ce n'est pas très grave pour des fûts contenant des masses faibles de plutonium, mais cela n'est pas toujours le cas. Il faudrait donc que le système ait le Keff le plus petit possible. Malheureusement, la couronne cylindrique en polythène constitue un réflecteur idéal et ne va donc pas dans le sens désiré. Des recherches sont effectuées (12) pour tenter de corriger cet effet de multiplication (6).

A titre d'exemple, la référence bibliographique (2) mentionne que cet effet de multiplication peut être évalué à 10% dans le cas particulier d'un système prévu pour un conditionnement de 9 litres comprenant un échantillon de 60 grammes de plutonium à 90% de plutonium 239.

Aux inconvénients résultant des méthodes existantes s'ajoutent des difficultés dues au nombre de renseignements requis avant toute mesure:
– hauteur de remplissage du fût,
– nature des déchets (cellulose, plastique, verre, métal, autres),
– estimation de la masse de matière fissile (10),
– connaissance de la composition isotopique (11) ou sa connaissance «approximative», etc.

Au fur et à mesure que les méthodes de mesures se développent, des coefficients nouveaux apparaissent: il en sera ainsi des coefficients de correction dus au positionnement de la source, des coefficients de correction dus à l'effet de multiplication. Quant aux autres coefficients utilisés actuellement, ceux-ci sont très souvent déterminés par pesée du fût et par prise en compte de la hauteur de remplissage, ce qui est vraiment peu rigoureux sur le plan technique. Ce sont les coefficients de correction d'atténuation et d'autoabsorption (détection gamma) et le coefficient affiché de temps mort (détection neutron). L'utilisation de ces coefficients revient à supposer implicitement que la matrice de déchets est homogène et selon la référence bibliographique (12) «de grandes erreurs résulteront dans l'interprétation des mesures sur les déchets si l'on adopte, comme on le fait souvent, des distributions homogènes de matériaux et uniformes de sources».

Compte tenu du nombre de renseignements demandés et du nombre de facteurs de correction ou paramètres intervenant dans les méthodes connues, il est possible de se demander quelles sont les conséquences résultant d'une erreur sur un renseignement (exemple: hauteur de remplissage du fût), erreur éventuellement conjuguée avec une autre (nature de matrice de déchets,...). Il en résulte que l'analyse de l'assurance qualité du procédé de mesures est d'autant plus complexe que ces procédés sont complexes, l'influence de certains paramètres étant malaisée à estimer sans étude préalable.

La mise en application pratique des méthodes qui viennent d'être décrites s'est traduite par la réalisation de systèmes non uniformes, non standardisés, à tel point que s'il existait, ce qui ne semble pas être le cas (12), une analyse de fiabilité d'un système et une analyse d'assurance qualité du processus de mesure utilisé, rien ne prouverait que ces analyses pourraient être reconduites pour une autre installation utilisant les principes de ces méthodes.

Les procédés connus sont complexes et coûteux; leurs performances réelles ne sont pas en rapport avec leur complexité et leur coût. S'il est nécessaire, pour répondre aux problèmes posés, de déterminer la masse de plutonium et sa composition isotopique, cette composition isotopique est, en réalité, soit supposée connue, soit approximativement connue ou déterminée d'une façon plus ou moins empirique. Les possibilités de telles installations ne correspondent pas à celles que l'on attend: en effet, des incertitudes, non négligeables, demeurent (répartition hétérogène de la source, effet de multiplication,...). Ces installations ne sont ni mobiles, ni adaptables à des conteneurs de déchets de diverses dimensions; elles ne se prêtent pas aux contrôles de déchets très irradiants.

L'invention a pour but de remédier aux inconvénients des procédés et dispositifs de mesures existants pour la détermination des activités volumiques et massiques et l'estimation de la masse de plutonium dans des déchets radioactifs. L'invention a notamment pour but de fournir un procédé et un dispositif simples, peu coûteux, faciles à mettre en œuvre, peu encombrants, facilement déplaçables, s'adaptant à n'importe quelles formes et dimensions de récipient contenant pratiquement n'importe quelle nature de déchets, quelle que soit pratiquement la répartition de la contamination des déchets dans le récipient et quel que soit pratiquement le débit de fluence des rayonnements émis, sans qu'il soit nécessaire de placer le ou les détecteurs aussi près que possible du récipient.

Ces buts sont atteints, comme on le verra plus loin en détail, à partir de considérations théoriques qui mettent en évidence le fait que l'émission neutronique d'un fût ou d'un récipient contenant des déchets correspondant à une activité massique ou volumique donnée de plutonium sous une forme volumique donnée est pratiquement constante quelle que soit la combustion massique des combustibles d'origine:

– l'émission neutronique considérée étant l'émission neutronique totale (neutrons de fissions spontanées et neutrons de réactions $(\alpha, n)$); la solution proposée par l'invention peut être qualifiée de «méthode globale»,

– l'activité massique ou volumique considérée est l'activité alpha massique ou volumique des isotopes du plutonium et de leurs descendants (américium de nombre de masse 241) dont la période radioactive est supérieure à 50 ans,

– il est à noter que l'activité volumique peut également être l'activité volumique de tous les isotopes du plutonium, y compris celle du plutonium 241. Cela revient à ajouter aux activités volumiques partielles des isotopes du plutonium émetteur alpha de périodes supérieures à 50 ans et à celle de l'américium 241, l'activité volumique partielle alpha et béta du plutonium 241, émetteur essentiellement béta de période inférieure à 50 ans, la somme de ces activités volumiques en nombre de CMA est alors à comparer à la valeur de $210^4$ CMA précédemment définie comme limite d'acceptabilité pour un stockage définitif, ce qui va dans le sens de la sécurité.

Cette variante qui conduit dans la pratique à une détermination par excès des activités volumiques sans changer quoi que ce soit au niveau de l'estimation des masses du plutonium comme nous le verrons plus loin, fut considérée initialement, au moment de la mise au point de la méthode, comme une sorte de garantie morale vis-à-vis des limites d'acceptabilité.

Actuellement cette remarque, qui montre le caractère général de cette méthode, vaut également par le fait qu'elle pourrait se révéler utile par la suite au cas où les critères de gestion des déchets viendraient à considérer non pas la seule activité alpha, mais l'activité alpha et béta.

De nombreux avantages découlent de la propriété énoncée ci-dessus.

Cette façon de faire, par contre, permet de profiter de nombreux avantages découlant de la propriété énoncée ci-dessus.

En effet, le procédé et le dispositif de l'invention éliminent les défauts des méthodes précédentes, tout en conduisant à des installations très simples et moins coûteuses, uniquement basées sur la détection des neutrons «passifs», quelles que soient leurs origines.

L'invention vise un procédé de détermination de l'activité volumique et/ou massique et d'estimation de la masse de plutonium contenu dans des déchets, caractérisé en ce qu'il consiste à mesurer uniquement l'émission neutronique globale des déchets, quelles que soient les compositions isotopiques du plutonium contenu dans les déchets (c'est-à-dire quelles que soient les combustions massiques des combustibles de réacteurs nucléaires «eau légère» par exemple, d'où est extrait le plutonium).

Selon une autre caractéristique, l'activité volumique n des déchets occupant un volume prédéterminé, exprimée en nombre de concentrations maximales admissibles (CMA) est obtenue en effectuant le rapport

$$\frac{N}{Sn}$$

dans lequel N représente l'émission neutronique globale produite par ces déchets pour le volume prédéterminé et Sn représentant l'émission neutronique correspondant à une concentration maximale admissible dans le volume considéré.

Selon une autre caractéristique, l'activité massique des déchets exprimée en $Ci.T^{-1}$ est obtenue en effectuant le rapport

$$\frac{N}{m \, Sa}$$

dans lequel N représente l'émission neutronique globale produite par ces déchets pour le volume prédéterminé, Sa représente l'émission neutronique du plutonium pour le composé considéré correspondant à un Curie «alpha» du plutonium, m représente la masse de déchets occupant le volume prédéterminé.

Selon une autre caractéristique, la masse de plutonium contenu dans des déchets occupant un volume prédéterminé est obtenue en effectuant le rapport

$$\frac{N}{S_M}$$

dans lequel N représente l'émission neutronique globale produite par ces déchets pour le volume prédéterminé et $S_M$ représente l'émission neutronique massique du plutonium pour le composé de plutonium considéré.

L'invention a aussi pour objet un dispositif de détermination de l'activité volumique et/ou massique et d'estimation de la masse de plutonium contenu dans des déchets, caractérisé en ce qu'il comprend au moins un élément détecteur capable de détecter tous les neutrons émis par ces déchets, cet élément détecteur étant disposé de manière que tout point des déchets voit l'élément détecteur sous un angle solide ($\alpha$) pratiquement constant et une échelle de comptage reliée à une sortie du détecteur pour compter les neutrons reçus par celui-ci.

Selon une autre caractéristique, le dispositif comprend une pluralité d'éléments détecteurs disposés de manière que la somme des angles solides sous lesquels tout point des déchets voit ces éléments détecteurs, soit pratiquement constante, l'échelle de comptage étant reliée aux sorties des détecteurs.

Selon une autre caractéristique, l'échelle de comptage comprend un compteur capable de compter sur un temps prédéterminé et/ou sur un précompte.

Selon une autre caractéristique, chaque détecteur est entouré partiellement ou totalement d'une paroi de ralentissement des neutrons. Cette paroi peut être complétée par une paroi externe en matériau absorbeur de neutrons thermiques (cadmium par exemple) si l'on constate que le bruit de fond, en l'absence de tout fût ou conteneur est soumis à l'influence de neutrons thermiques d'origines extérieures.

Les caractéristiques et avantages de l'invention ressortiront mieux de la description qui va suivre, donnée en référence aux dessins annexés dans lesquels:

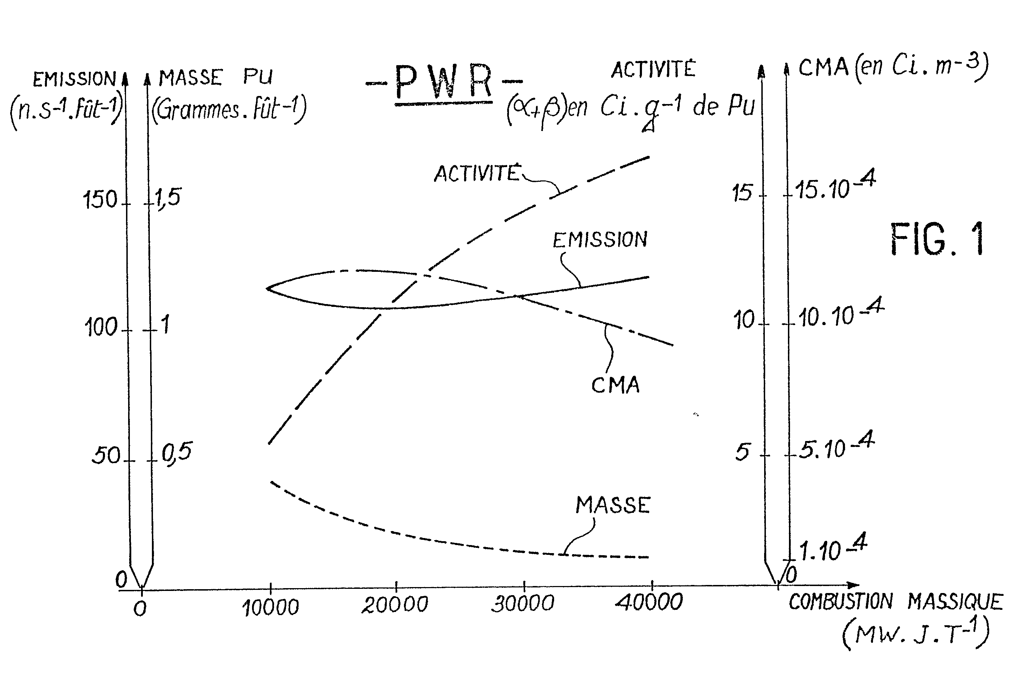

— la figure 1 est un diagramme qui représente, en exemple, en fonction de la combustion massique des combustibles de réacteurs nucléaires à eau pressurisée (PWR) d'où le plutonium est extrait, les variations:

— de l'activité (alpha + bêta) par gramme de plutonium (en curies par gramme),

— de la concentration maximale admissible du mélange (en $Ci.m^{-3}$) de tous les isotopes du plutonium, l'isotope de nombre de masse 241 y compris, comme indiqué dans la variante précédemment décrite,

— de la masse de plutonium en gramme par fût correspondant à $2.10^4$ CMA de plutonium dans un fût de 100 litres,

— de l'émission neutronique en neutrons par seconde par fût, d'un fût de 100 litres à $2.10^4$ CMA. de plutonium,

— la figure 2 est un diagramme qui représente les variations des mêmes grandeurs que celles envisagées ci-dessus, mais cette fois-ci, pour du plutonium extrait de combustibles de réacteurs nucléaires à eau bouillante (BWR),

— la figure 3 représente schématiquement un mode de réalisation d'un dispositif conforme à l'invention,

— la figure 4 représente une partie du dispositif de la figure 3, vue en coupe,

— la figure 5 représente schématiquement un autre mode de réalisation du dispositif de l'invention,

— la figure 6 représente une partie du dispositif de la figure 5, en perspective.

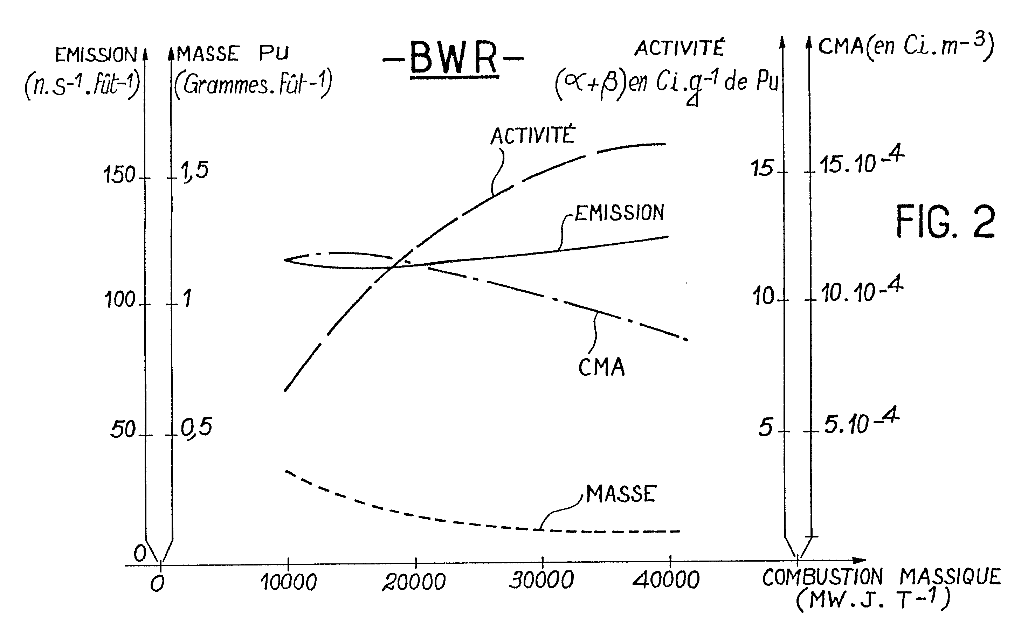

Les diagrammes représentés sur les figures 1 et 2 vont permettre de mieux comprendre les concepts du procédé et du dispositif de l'invention, ces concepts étant fondés sur la considération de l'activité volumique limite, l'activité limite d'un récipient ou fût contenant des déchets irradiants, la masse limite d'un fût, l'émission neutronique limite:

— L'activité volumique limite:

C'est la limite d'acceptabilité pour un stockage définitif de conteneurs ou fûts de déchets technologiques contaminés par du plutonium. Actuellement cette limite est de $2.10^4$ CMA (concentrations maximales admissibles). La valeur de la concentration maximale admissible à considérer est celle définie pour l'eau, pour des composés sous forme soluble, et établie pour une personne directement affectée à des travaux sous rayonnements qui serait exposée de façon continue à raison de 168 heures par semaine. (1). La concentration maximale admissible s'exprime en $Ci.m^{-3}$ (Curies par mètre cube). L'activité volumique limite en $Ci.m^{-3}$ est égale à $2.10^4$ fois la valeur de la CMA exprimée en $Ci.m^{-3}$.

– L'activité limite d'un fût:

Si l'on considère un fût de 100 litres

$$\left(\frac{1}{10}\,m^3\right),$$

l'activité limite du fût en Ci.fût$^{-1}$ sera égale à

$$2\cdot 10^4\cdot\frac{1}{10}$$

fois la valeur de la CMA. Ce que l'on écrira ainsi:

$$2\cdot 10^4\cdot\frac{1}{10}\,CMA.$$

Soit A l'activité massique du plutonium en Curie par gramme (Ci.g$^{-1}$), $\mathscr{M}$ la masse limite d'un fût en gramme par fût (g.fût$^{-1}$), peut s'exprimer par la relation:

$$\mathscr{M}=2\cdot 10^4 CMA\cdot\frac{1}{10}\cdot\frac{1}{A}$$

grammes par fût (g.fût$^{-1}$)
pour un fût de 100 litres

$$\left(\frac{1}{10}\,m^3\right).$$

– L'émission neutronique limite:

On désigne par $S_M$ l'émission neutronique du plutonium exprimée en neutrons par seconde et par gramme (n.s$^{-1}$.g$^{-1}$), pour un composé considéré de plutonium. L'émission neutronique limite $\mathscr{N}$ s'exprime en neutrons par seconde et par fût (n.s$^{-1}$.fût$^{-1}$). Pour un fût de 100 litres

$$\left(\frac{1}{10}\,m^3\right),$$

cette émission neutronique limite est:

$$\mathscr{N}=2\cdot 10^4 CMA\cdot\frac{1}{10}\cdot\frac{1}{A}\cdot S_M$$

neutrons par seconde et par

fût (n.s$^{-1}$.fût$^{-1}$)

Les diagrammes des figures 1 et 2 indiquent notamment l'émission neutronique $\mathscr{N}$ d'un fût de 100 litres (ns$^{-1}$.fût$^{-1}$) pour du plutonium sous forme d'oxyde par exemple provenant de combustible PWR ou de combustible BWR, en fonction de la combustion massique de ces combustibles d'origine.

On constate que l'émission neutronique d'un fût d'activité volumique correspondant à 2.10$^4$ CMA est pratiquement constante quelle que soit la combustion massique du combustible dont le plutonium est extrait. Plus précisément,

– cette émission est constante, à moins de 10% près, pour un fût contenant du plutonium, sous forme d'oxyde, extrait de combustible PWR dont la combustion massique varierait entre 10 000 et 33 000 MWj.T$^{-1}$,

– cette émission est constante, à 10% près, pour un fût contenant du plutonium, sous forme d'oxyde, extrait de combustibles «eau-légère» (PWR et BWR) dont les combustions massiques seraient comprises entre 10 000 et 33 000 MWj.T$^{-1}$ (PWR) et 10 000 et 25 000 MWj.T$^{-1}$ (BWR).

La formule de l'émission neutronique limite établie plus haut pour une activité volumique limite de 2.10$^4$ CMA peut être généralisée, sans difficulté, pour toute activité volumique considérée: l'émission neutronique d'un fût d'activité volumique donnée est pratiquement constante quelle que soit la combustion massique du combustible dont le plutonium est extrait, c'est-à-dire quelles que soient les compositions isotopiques considérées.

Il est donc possible, à l'aide d'une simple mesure de l'émission neutronique globale d'un fût de déterminer l'activité volumique correspondante de ce fût sans se soucier des combustions massiques des combustibles d'origine, c'est-à-dire sans faire intervenir les compositions isotopiques du plutonium.

D'une façon analogue, il serait possible de montrer que l'émission neutronique d'une tonne de déchets contenant une activité alpha de un Curie de plutonium, sous forme d'oxyde par exemple, est constante quelle que soit la combustion massique du combustible PWR ou BWR origine, c'est-à-dire pour toute composition isotopique du plutonium rencontrée en pratique.

L'émission neutronique d'un fût ou conteneur est donc, en pratique, directement proportionnelle à l'activité volumique, exprimée en nombre de CMA, ainsi qu'à l'activité massique exprimée en Curies par tonne de déchets, quelle que soit la combustion massique des combustibles «eau légère» origines.

C'est cette propriété fondamentale qui est à la base du procédé de l'invention:

Des expressions précédentes, il est facile d'établir la relation existant entre l'émission neutronique $\mathscr{N}$ et la masse $\mathscr{M}$ du plutonium contenue dans un fût d'activité volumique correspondant à 2.10$^4$ CMA.

$$\mathscr{M}_{(g.\,\text{fût}^{-1})}=\frac{\mathscr{N}(ns^{-1}\text{fût}^{-1})}{S_M(ns^{-1}g^{-1})}$$

Les diagrammes des figures 1 et 2 donnent les courbes de variation de la masse $\mathscr{M}$ de plutonium, sous forme d'oxyde, provenant de combustible PWR et BWR, en fonction de la combustion massique de ces combustibles d'origine; cette masse est contenue dans un fût d'activité volumique correspondant à 2.10$^4$ CMA.

On constate que ces courbes sont relativement aplaties, d'où:

– si l'on connaît la combustion massique du combustible d'origine, il est possible d'évaluer la masse de plutonium correspondante,

– si l'on connaît les limites de combustion massiques de combustibles retraités au cours d'une campagne, il est possible d'évaluer la masse maximale et la masse minimale qui peut être contenue, dans un fût d'activité volumique correspondant à 2.10$^4$ CMA.

Des diagrammes des figures 1 et 2, on peut déduire par exemple que pour du plutonium, sous forme d'oxyde, issu de combustibles PWR, dont les combustions massiques varieraient au cours d'une campagne de 22 000 MWj.T$^{-1}$ à 30 000 MWj.T$^{-1}$, la masse maximale contenue dans un fût (d'activité volumique correspondant à 2.10$^4$ CMA) est de 200 milligrammes, la masse minimale dans les mêmes conditions est de 150 milligrammes.

La masse de plutonium contenue dans ce fût pourrait donc être estimée, par excès, à 200 milligrammes, à 25% près, incertitude relative qui apparaît comme étant tout-à-fait raisonnable dans le cadre de ces estimations.

Il est évident que l'on peut généraliser ce raisonnement à un fût d'activité volumique ou massique quelconque, puisque nous avons vu au paragraphe précédent que l'expression de l'émission spécifique peut être mise sous une forme tout à fait générale.

Il ressort des formules précédentes, qu'il est possible, avec un dispositif de comptage de l'émission neutronique globale, ne séparant pas les neutrons de fissions, des neutrons de réactions ($\alpha$, n), de déterminer l'activité volumique et/ou l'activité massique des fûts contenant du plutonium, et d'évaluer, avec des incertitudes bien connues, les masses de plutonium correspondantes, ces incertitudes étant d'autant plus faibles que les limites haute et basse des combustions massiques des combustibles retraités au cours d'une campagne sont plus rapprochées. Ce dispositif est celui de l'invention et sera décrit plus loin en détail.

L'activité volumique n d'un fût en nombre de CMA, l'activité massique en Ci.T$^{-1}$ et la masse M en (g.fût$^{-1}$) de plutonium dans les déchets contenus dans un fût de 100 litres, sont déterminées à partir de:

N: émission neutronique en ns$^{-1}$fût$^{-1}$, d'un fût de déchets de 100 litres,

m: masse correspondante en tonne,

M: masse de plutonium en g.fût$^{-1}$, dans un fût de 100 litres,

Sn: émission neutronique pour le composé de plutonium considéré en ns$^{-1}$fût$^{-1}$, correspondant à 1 CMA (ns$^{-1}$fût$^{-1}$(CMA)$^{-1}$),

$S_M$: émission neutronique massique en ns$^{-1}$g$^{-1}$ de plutonium, pour le composé de plutonium considéré,

Sa: émission neutronique du plutonium exprimée en neutrons par seconde et par Curie alpha (Ns$^{-1}$ Ci$^{-1}$), pour le composé de plutonium considéré,

A: activité massique alpha du plutonium en Cig$^{-1}$,

a: activité massique à déterminer, en Ci.T$^{-1}$.

Alors:

$$n = \frac{N(ns^{-1}. fût^{-1})}{s_n(ns^{-1}. fût^{-1}. (CMA)^{-1})} \quad (1)$$

$$M_{(g.fût^{-1})} = \frac{N(ns^{-1}. fût^{-1})}{s_M(ns^{-1}. g^{-1})} \quad (2)$$

(Les symboles précédents $\mathcal{M}$ et $\mathcal{N}$ correspondent aux valeurs particulières de M et N pour n = 2.10$^4$ CMA).

$$a = \frac{N(ns^{-1} fût^{-1})}{m(Tfût^{-1}) Sa(ns^{-1} Ci^{-1})} \quad (3)$$

avec

$$Sa(ns^{-1} Ci^{-1}) = \frac{S_M(ns^{-1} g^{-1})}{A (Ci g^{-1})}$$

Il résulte des formules (1), (2) et (3) que si l'on veut obtenir par excès, les valeurs des activités volumiques (en nombre de CMA), des activités massiques (en Ci.T$^{-1}$) des masses (en g.fût$^{-1}$), il convient de choisir les plus faibles valeurs des émissions spécifiques $s_n$, Sa et $S_M$.

Le procédé et le dispositif de l'invention, qui sont mis en œuvre, comme on vient de le voir, à partir d'un comptage neutronique «global» fournissent de bons résultats dans la détermination des activités volumiques et massiques et dans l'estimation de la masse du plutonium, quels que soient le temps de vieillissement du plutonium, la nature chimique du composé de plutonium et les neutrons résultant des fissions provoquées:

– en ce qui concerne le temps de vieillissement du plutonium, la quantité d'américium 241 formé à partir du plutonium 241 est croissante en fonction du temps, les émissions neutroniques des fûts et les masses de plutonium correspondantes n'en sont pratiquement pas affectées pour de faibles temps de vieillissement. Mais en réalité, l'américium est considéré au même titre que tout isotope de plutonium, quel que soit le temps de vieillissement à prendre en compte, ce qui ne pose pas de problème particulier au niveau des principes de la méthode,

– en ce qui concerne la nature chimique du composé de plutonium, celle-ci a une influence sur l'émission neutronique. A priori, il convient donc de répertorier les fûts de déchets selon leur origine si l'on veut avoir une précision importante dans la détermination des activités volumiques et massiques et dans l'estimation des masses de plutonium.

A remarquer que le dispositif de contrôle au niveau de boîtes à gants, utilisant la méthode proposée se prête tout particulièrement bien à un contrôle «à la carte» en fonction de chaque forme chimique du plutonium, si besoin est.

Lorsque des mesures d'activités volumiques et massiques des mesures de masse doivent être effectuées sur du plutonium comportant plusieurs formes chimiques ou si l'on ne connaît pas la forme chimique du plutonium, il suffit de prendre les valeurs de $s_n$, Sa et $s_M$ les plus faibles pour avoir des résultats majorés et se placer ainsi dans les meilleures conditions de sécurité.

– en ce qui concerne les neutrons résultant des fissions provoquées, on constate que, sur la plupart des fûts de déchets, le coefficient keff (fissions provoquées ou induites) est généralement faible; la contribution de ces neutrons est la plupart du temps totalement négligeable. Lorsque ce n'est pas le cas, les considérations précédemment développées montrent que l'on obtient des valeurs majorées des activités volumiques et massiques et des masses, ce qui va toujours dans le sens de la sécurité.

Lorsque les déchets comportent un absorbeur de neutrons, ceci peut conduire à des évaluations par défaut des activités volumiques et massiques et de la masse de plutonium contenue dans un fût. C'est le cas par exemple lorsque les déchets comprennent des morceaux d'écran de protection, constitués de plâtre polythène bore. On remédie à cet inconvénient, de manière connue, en s'assurant lors du démontage d'écrans de protection que les déchets correspondants sont bien mis à part de tout autre déchet contaminé par du plutonium. Faute de cette parade, seule une détection gamma pourrait conduire aux évaluations recherchées, toute méthode par comptage neutronique quelle qu'elle soit, étant alors à écarter.

Le procédé de l'invention permet bien d'atteindre les buts mentionnés plus haut:

— en ce qui concerne le temps de mesure, le procédé consistant à compter tous les neutrons, le temps de comptage est beaucoup plus réduit que celui des autres procédés qui ne comptent que certains neutrons en introduisant des temps morts «artificiels», non négligeables dans certains cas; mais c'est surtout l'absence de spectrométrie gamma qui fait gagner du temps car la spectrométrie nécessite un temps d'exploration du fût de l'ordre de plusieurs dizaines de minutes.

— les coûts d'investissement sont au moins dix fois plus faibles que pour les procédés et dispositifs existants. Les coûts d'exploitation sont également très réduits compte tenu qu'il est inutile d'employer un personnel hautement qualifié et que le temps de mesure fonction de la limite d'acceptabilité et de la précision recherchée est généralement faible; en particulier ce temps devient souvent négligeable devant le temps de manipulation des fûts ou conteneurs lorsque la limite d'acceptabilité est celle actuellement en vigueur en France, c'est-à-dire $2.10^4$ CMA.

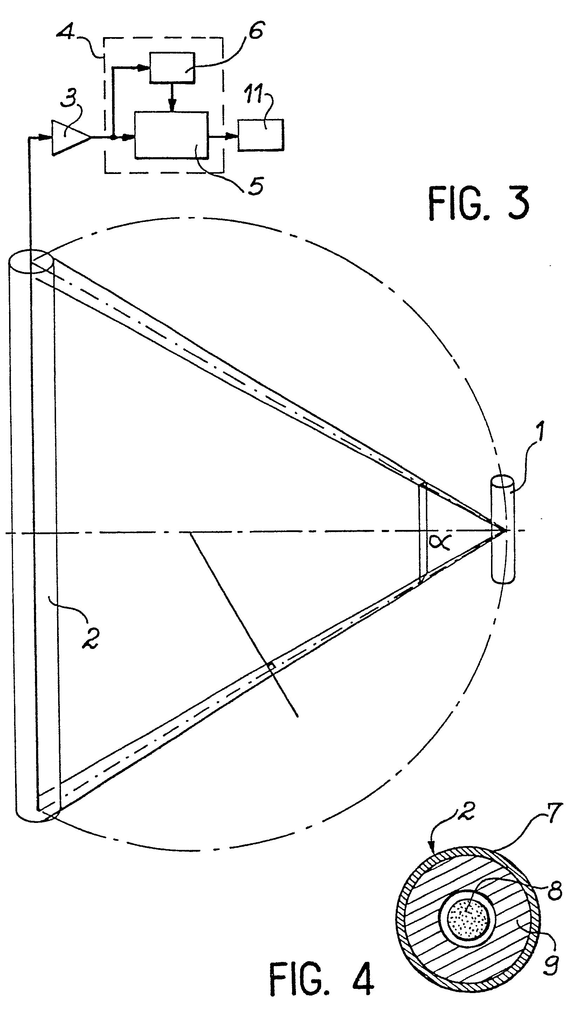

Les figures 3 et 4 représentent schématiquement un premier mode de réalisation d'un dispositif conforme à l'invention. Ce dispositif permet, selon le procédé décrit plus haut, pour des déchets contaminés contenus par exemple dans un récipient 1, de déterminer l'activité volumique et/ou massique et d'estimer la masse du plutonium contenu dans ces déchets. Ce dispositif comprend un élément détecteur 2 capable de détecter tous les neutrons quelles que soient leurs origines émis par les déchets contenus dans le récipient 1. Cet élément détecteur est disposé, comme on le verra plus loin en détail, de manière que tout point des déchets voit cet élément détecteur sous un angle solide pratiquement constant. Le dispositif comprend aussi un amplificateur 3 permettant d'amplifier les impulsions fournies par le détecteur 2. Cet amplificateur est de préférence un amplificateur de courant. La sortie de l'amplificateur est reliée à une échelle de comptage 4 qui comprend un compteur 5 et des moyens 6 constitués par exemple par une «horloge» pilotée par la fréquence du courant secteur permettant de fixer la durée de comptage du compteur 5. La sortie du compteur 5 peut être reliée à l'entrée d'un calculateur 11 qui permet de déterminer, sans avoir à utiliser d'abaque, l'activité volumique en nombre de concentrations maximales admissibles, l'activité massique en Curie par tonne ainsi que d'estimer la masse de plutonium en fonction des indications du compteur 5.

La figure 4 représente schématiquement en coupe, et à plus grande échelle, un élément détecteur. L'élément détecteur comprend un détecteur proprement dit 8, une paroi 9 en polythène par exemple entourant partiellement ou totalement le détecteur 8, une paroi 7 en cadmium par exemple entourant plus ou moins totalement la paroi en polythène 9.

Le détecteur 8 peut être un détecteur cylindrique ou un détecteur «plan». La chambre de détection contient de l'hélium 3 par exemple, ou les parois sont à dépôt de lithium 6 par exemple.

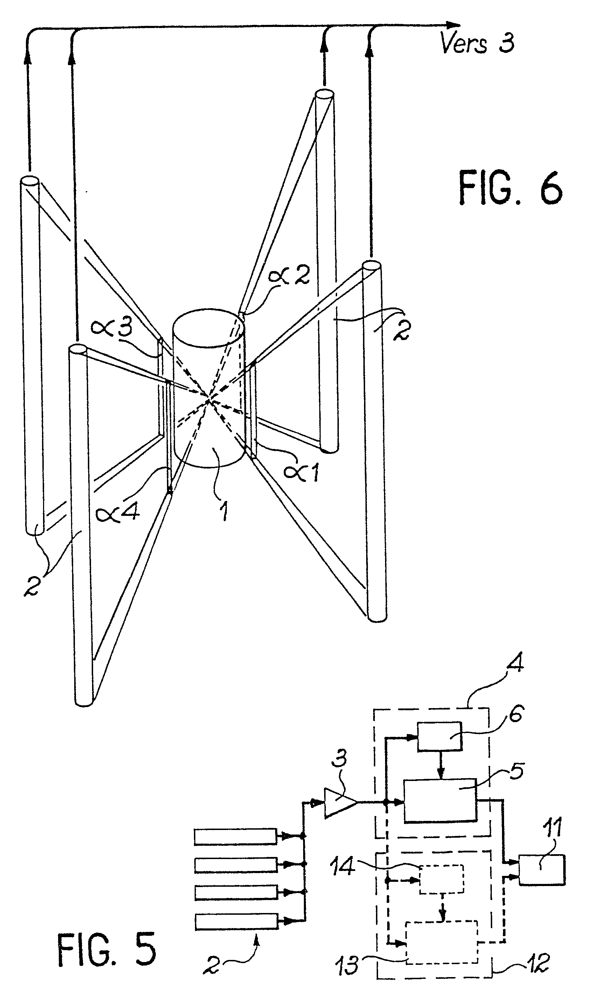

La figure 5 représente schématiquement un autre mode de réalisation du dispositif de l'invention. Dans cet autre mode de réalisation, le dispositif comprend une pluralité d'éléments détecteurs 2 dont les sorties sont reliées aux entrées d'une échelle de comptage 4 par l'intermédiaire d'un amplificateur de courant, amplifiant des impulsions provenant des éléments détecteurs 2. Comme dans le mode de réalisation précédent, l'échelle de comptage 4 comprend un compteur 5 et une «horloge» 6 pilotée par la fréquence du courant secteur. Dans ce mode de réalisation, on a représenté une autre échelle de comptage 12 comprenant un compteur 13 et une «horloge» 14. Cette autre échelle de comptage 12 peut être par exemple une échelle de précomptage, fonctionnant sur une période de temps assez courte et permettant de gagner du temps dans la détermination de l'activité volumique et/ou massique et dans l'estimation de la masse du plutonium contenu dans les déchets. En effet, certains fûts sont suffisamment chargés en plutonium pour que le nombre d'impulsions enregistrées au bout de quelques secondes soit suffisant pour évaluer les activités volumiques et massiques et les masses de plutonium avec une précision valable. Bien entendu, les échelles de comptage 4, 12 peuvent être reliées, comme dans le mode de réalisation précédent, à un calculateur 11.

La figure 6 représente schématiquement et en perspective le récipient 1 contenant des déchets contaminés, ainsi que la pluralité d'éléments détecteurs 2 du mode de réalisation de la figure 5. Dans ce mode de réalisation, les éléments détecteurs sont disposés de manière que la somme des angles solides $\alpha_1$, $\alpha_2$, $\alpha_3$, $\alpha_4$, sous lesquels les éléments détecteurs voient le récipient 1, soit pratiquement constante. Il est bien évident que le nombre d'éléments détecteurs est limité à quatre pour faciliter la représentation, mais ce nombre pourrait être différent.

Les éléments détecteurs qui ont la forme de colonnes sont facilement déplaçables et il est ainsi possible de faire des contrôles de certains objets ou déchets sur place. Ils peuvent également s'adapter à tout type de conditionnement, y compris ceux de grandes dimensions (fûts de quelques litres, à 100 litres, 200 litres,..., conteneurs 1,7 × 1,7 × 1,7 m).

Il est possible également de réaliser de petites installations facilement déplaçables, avec un seul détecteur à hélium par exemple de petites dimensions, destinées à contrôler directement les déchets à la sortie des boîtes à gants, avant leur introduction dans les fûts.

Dans des installations utilisant le plutonium sous des formes chimiques très différentes, le dispositif de l'invention permet de tenir compte de l'émission spécifique du plutonium particulière à chacune de ces formes chimiques.

– le dispositif qui permet la mise en œuvre du procédé de l'invention est beaucoup plus simple que les dispositifs existants:

Il n'y a plus de système complexe de spectrométrie gamma, il n'est pas nécessaire de séparer les neutrons de fissions spontanées des neutrons de réactions (α, n); une simple échelle de comptage suffit. Ne cherchant plus à obtenir le comptage en coïncidence des neutrons issus d'une même fission, il n'est plus nécessaire d'avoir plusieurs dizaines de détecteurs neutrons: pour certaines applications, un seul détecteur suffit, pour d'autres quelques détecteurs suffisent. Il n'est plus nécessaire d'installer des systèmes de déplacement à crémaillère du détecteur gamma; il n'est plus indispensable d'installer une table tournante; il n'est plus indispensable d'installer une couronne cylindrique en polythène: la partie mécanique est réduite à des supports mécaniques sans mouvement. En cas de panne, il est inutile de faire appel à des spécialistes.

– l'hétérogénéïté de densité des déchets a des effets négligeables par rapport aux effets constatés avec les procédés et dispositifs connus. A titre d'exemple, un conditionnement de laiton, de un centimètre d'épaisseur, entourant une source de plutonium, n'a aucune influence détectable sur le résultat des comptages. De plus, aucune différence de comptage n'est relevée pour une source placée dans un fût de 100 litres rempli de déchets comprenant $1/3$ vinyle, $1/3$ coton, $1/3$ caoutchouc, et pour la même source placée ensuite dans un fût identique plein de gravats.

– le procédé et le dispositif de l'invention répondent aux obligations en matière de sécurité.

Si la forme chimique du plutonium est inconnue, c'est l'émission neutronique spécifique la plus faible qui est prise en considération, ce qui va dans le sens de la sécurité.

Par ailleurs, toute émission de neutrons parasites se traduit par une majoration des activités volumiques et massiques et de la masse, ce qui va dans le sens de la sécurité.

L'influence de l'hétérogénéïté de la répartition spatiale de la contamination était l'un des défauts majeurs des dispositifs et procédés précédents. Le procédé et le dispositif de l'invention éliminent ce défaut, d'une part parce qu'ils n'utilisent que les neutrons émis par le plutonium, particules extrêmement pénétrantes, et d'autre part parce qu'ils utilisent un ou plusieurs éléments détecteurs, sous forme de colonnes facilement mobiles et déplaçables, et adaptables à toute géométrie.

Il est donc possible, si l'on utilise un seul détecteur, d'éloigner l'élément détecteur du fût, ou du conteneur, et de déterminer la longueur de la partie détectrice (et éventuellement la largeur, cas de détecteurs «plans») de telle sorte que les incertitudes liées aux variations, en fonction de la répartition de la source, des composantes géométriques et physiques de la fluence soient pratiquement négligeables ou inférieures à une limite jugée acceptable. Pour cela, la distance fût-élément détecteur et la longueur de la partie détectrice (et éventuellement la largeur, cas de détecteurs «plans») sont telles que tout point du fût ou du conteneur voit l'élément détecteur sous, pratiquement, le même angle solide, quelle que soit la position des déchets dans le fût ou le conteneur.

Il est possible de généraliser cette remarque à plusieurs éléments détecteurs: dans ce cas, la configuration adoptée est telle que la somme des angles solides sous lesquels tout point d'un fût ou d'un conteneur voit les parties détectrices est pratiquement constante, quelles que soient les positions des détecteurs.

Il est donc possible grâce au procédé et au dispositif de l'invention, de rendre négligeable l'influence de l'hétérogénéïté de la répartition spatiale de la source ou de rendre cette influence acceptable en choisissant de manière appropriée, le nombre de détecteurs et leur disposition, les dimensions de leur partie détectrice, l'éloignement du fût ou du conteneur (en fonction des autres paramètres rentrant dans les données du procédé et du dispositif).

L'un des éléments favorables pour diminuer l'influence de l'hétérogénéïté de la répartition spatiale de la contamination était d'utiliser une table tournante, dans les dispositifs connus. Dans le dispositif de l'invention, il est toujours possible d'utiliser une table tournante qui conduit à moyenner au cours de la rotation les variations d'angles solides, mais cela s'avère non indispensable ce qui ajoute à l'intérêt du dispositif et du procédé.

– l'influence des rayonnements gamma parasites est pratiquement nulle.

Mais il convient de faire remarquer un autre avantage du procédé et du dispositif de l'invention: alors que les procédés et dispositifs connus sont limités, du fait de l'utilisation de la spectrométrie gamma, à une faible activité résiduelle en produits de fission, il n'en est pas de même avec le procédé et le dispositif de l'invention.

Les détecteurs et compteurs fonctionnent avec des amplificateurs à collection de courant, ce qui permet d'élargir les possibilités de fonctionnement des détecteurs de neutrons en présence d'un rayonnement gamma intense: un tel système permet en effet de réduire en grande partie les empilements d'impulsions gamma dont la somme des amplitudes atteindrait ou dépasserait le seuil de discrimination, ce qui se traduirait alors par l'apparition de comptages parasites. Un détecteur à hélium 3 peut, dans ces conditions, fonctionner jusqu'à des débits de dose gamma de 40 rad.h$^{-1}$

alors que sa limite d'utilisation habituelle (avec un amplificateur de charge) est de 100 mrad.h$^{-1}$ à 1 rad.h$^{-1}$.

Le procédé et le dispositif de l'invention qui n'utilisent pas le principe de la spectrométrie gamma utilisent donc toute l'étendue des possibilités des détecteurs et ainsi évaluent les activités volumiques et massiques de déchets contaminés par du plutonium en présence de produits de fission en quantités non négligeables, ce qui était impossible avec les procédés et dispositifs connus.

– Le coefficient de multiplication (keff) des déchets, dans leur conditionnement ne doit pas être augmenté par le système de détection lui-même, lors de la mesure. Les méthodes et dispositifs connus qui utilisent une couronne cylindrique en polythène introduisent un véritable réflecteur autour des déchets et augmentent ainsi l'effet de multiplication.

Dans la solution proposée par l'invention, les éléments détecteurs ont un effet négligeable et ne contribuent pas à une augmentation du coefficient de multiplication keff.

Il est possible de déterminer l'activité volumique et/ou massique de déchets «alpha» et d'estimer la masse de plutonium correspondante en utilisant une simple installation de comptage neutronique, n'utilisant pas la méthode classique et complexe des coïncidences neutroniques, mais comptant tous les neutrons; d'où la réalisation du dispositif qui est simple et qui élimine les contraintes imposées par l'utilisation de la spectrométrie gamma et la méthode des coïncidences neutroniques.

La méthode classique des coïncidences neutroniques impose contrairement au procédé de l'invention, l'utilisation d'un grand nombre de détecteurs neutrons pour précisément enregistrer les coïncidences de neutrons provenant d'une même fission. Pour éviter d'en mettre un plus grand nombre encore, ces détecteurs se trouvent donc placés le plus près possible du conteneur, ce qui provoque un effet désastreux et maximal d'hétérogénéité de répartition spatiale de la source et un effet de multiplication considérablement accru dû au réflecteur que constitue la couronne cylindrique entourant le fût.

Le procédé de l'invention permet, de plus, contrairement aux méthodes précédentes qui s'appuient sur des résultats de spectrométrie, d'évaluer les activités volumiques et massiques de déchets contaminés par du plutonium en présence de produits de fission, donc irradiants, puisque le débit de dose au niveau des compteurs peut atteindre 40 rad.h$^{-1}$; comme ces derniers peuvent être relativement éloignés des parois des conteneurs, le débit de dose au contact de ces conteneurs, souvent pris comme référence, peut être beaucoup plus élevé encore, ce qui veut dire que, pratiquement les déchets «irradiants» peuvent être traités de la même façon que ceux qui ne le sont pas.

BIBLIOGRAPHIE

(1) Journal officiel de la République Française du 30 juin 1966, Décret N° 66–450 du 20 juin 1966.

(2) A neutron well counter for plutonium assay in 200 l waste barrels. EYRICH – CUCHLE – SHAFIEE – pages 159 à 174. International meeting on monitoring of Pu-contaminated waste (ISPRA), 25–28 Sept. 79. Proceedings EUR 6629 (1979).

(3) Application de contrôles neutroniques dans les installations de fabrication et de retraitement des combustibles. ARNAL – DUMESNIL – EDELINE – GANIVET. Vienne. IAEA-CN-253-(1977). Proceedings of an international conference SALZBURG 2–13 may 1977. Nuclear Power and its Fuel Cycle Volume 7, pages 559 à 576.

(4) The detection of fissionable materials by mondestructive means. SHER – UNTERMYER – American Nuclear Society. 1980.

(5) Shift register coincidence electronics systems for thermal neutron counter – SWANSEN – COLLINSWORTH – KRICK – Nuclear Instruments and Methods 17 6 (1980).

(6) A mathematical model of Pu – coincidence counting systems HOOTON – LEES – Ispra 25–28 septembre 1979, pages 407–416.

(7) Non destructive monitoring of Pu – Contaminated wastes utilizing a Sb-Be neutron source – KIRCHNER – FILSS – MERZ – Ispra 25–28 septembre 1979, pages 287–295.

(8) Measurement of Pu contamination at the 10 nCig$^{-1}$ level in 55 gallon barrels of solid waste with a $^{252}$Cf assay systems – CRANE – Ispra 25–28 Septembre 1979, pages 217–226.

(9) An integrated solid waste measurement systems for plutonium fuel reprocessing at DOUNREAY nuclear power development establishment – BREMNER – MACLEOD – Ispra 25–28 septembre 1979, pages 29–40.

(10) Determination des quantités de matières fissiles contenues dans les déchets provenant des ateliers de fabrication des combustibles à base de plutonium – T. ARNAL, G. COUSINOU – International meeting on monitoring of Pu contaminated waste – Ispra 25–28 septembre 1979, pages 497–510.

(11) Mesure de la quantité de plutonium contenue dans des fûts de faible activité par spectrométrie gamma et comptage neutronique – FICHE, BERNE, LACRUCHE – Ispra 25–28 septembre 1979, pages 227 à 246.

(12) Working group 3 «Theoretical studies and nuclear data» – Ispra 25–28 septembre 1979, pages 563 à 566.

Les références 6 à 12 sont extraites de: International meeting on monitoring of Pu-Contaminated waste (ISPRA), 25–28 Sept. 79. Proceedings EUR6629. (1979).

**Revendications**

1. Procédé de détermination de l'activité volumique et/ou massique et d'estimation de la masse de plutonium contenu dans des déchets provenant d'usine de retraitement de combustibles, de sorte que la seule source d'émission neutronique est le plutonium, caractérisé en ce qu'il consiste à mesurer uniquement l'émission neutronique globale du plutonium et de ses composés, quelle que soit la composition isotopique du plutonium, cette émission neutronique étant sensiblement constante.

2. Procédé selon la revendication 1, caractérisé en ce que l'activité volumique n des déchets exprimée en nombre de concentrations maximales admissibles (CMA) est obtenue en effectuant le rapport

$$\frac{N}{Sn}$$

dans lequel N représente l'émission neutronique globale produite par ces déchets pour le volume prédéterminé et Sn représentant l'émission neutronique correspondant à une concentration maximale admissible dans ce volume prédéterminé.

3. Procédé selon la revendication 1, caractérisé en ce que l'activité massique des déchets, exprimée en Curie par tonne, est obtenue en effectuant le rapport

$$\frac{N}{m\,Sa}$$

dans lequel N représente l'émission neutronique globale produite par ces déchets pour le volume prédéterminé, m représente la masse de ces déchets, Sa représente l'émission neutronique du plutonium pour le composé considéré pour une activité de un Curie.

4. Procédé selon la revendication 1, caractérisé en ce que la masse de plutonium contenue dans des déchets occupant un volume prédéterminé, est obtenue en effectuant le rapport

$$\frac{N}{S_M}$$

dans lequel N représente l'émission neutronique globale produite par ces déchets pour le volume prédéterminé et $S_M$ représente l'émission neutronique massique du plutonium pour le composé considéré.

5. Dispositif de détermination de l'activité volumique et/ou massique et d'estimation de la masse de plutonium contenu dans des déchets provenant d'usine de retraitement de combustibles, de sorte que la seule source d'émission neutronique est le plutonium, caractérisé en ce qu'il comprend au moins un élément détecteur (2) capable de détecter tous les neutrons, quelles que soient leurs origines, émis par ces déchets, cette émission neutronique étant sensiblement constante, cet élément détecteur étant disposé de manière que tout point des déchets voit l'élément détecteur, sous un angle solide (α) pratiquement constant, et une échelle de comptage (4) reliée à une sortie du détecteur pour compter les neutrons reçus par celui-ci.

6. Dispositif selon la revendication 5, caractérisé en ce qu'il comprend une pluralité d'éléments détecteurs (2) disposés de manière que la somme des angles solides ($α_1$, $α_2$, $α_3$, $α_4$,...) sous lesquels les déchets sont vus par les détecteurs, est pratiquement constante, l'échelle de comptage (4) étant reliée aux sorties des détecteurs (2).

7. Dispositif selon l'une quelconque des revendications 5 et 6, caractérisé en ce que l'échelle de comptage (4) comprend un compteur (5) capable de compter sur un temps prédéterminé.

8. Dispositif selon l'une quelconque des revendications 5 et 6, caractérisé en ce que chaque élément détecteur (2) est entouré partiellement ou totalement d'une paroi (9) de ralentissement des neutrons.

9. Application du procédé conforme à la revendication 7, à la détermination de l'activité volumique et/ou massique et à l'estimation de la masse de plutonium dans des déchets de combustion d'un réacteur nucléaire à eau légère.

## Claims

1. Process for the determination of the volume and/or specific activity and the determination of the mass of plutonium contained in waste from a fuel reprocessing plant, so that the only neutron emission source is plutonium, characterized in that it consists of solely measuring the overall neutron emission of the plutonium and its compounds, no matter what the isotopic composition of the plutonium, said emission being substantially constant.

2. Process according to claim 1, characterized in that the volume activity n of the waste expressed in maximum admissible concentration number is obtained by forming the ratio

$$\frac{N}{Sn}\ ,$$

in which N represents the overall neutron emission produced by the waste for the predetermined volume and Sn represents the neutron emission corresponding to a maximum admissable concentration in this predetermined volume.

3. Process according to claim 1, characterized in that the specific activity of the waste, expressed in Curie per tonne, is obtained by forming the ratio

$$\frac{N}{m\,Sa}\ ,$$

in which N represents the overall neutron emission produced by the waste for the predetermined volume, m represents the mass of said waste, Sa represents the neutron emission of the plutonium for the considered compound and for an activity of one Curie.

4. Process according to claim 1, characterized in that the plutonium mass contained in the waste occupying a predetermined volume is obtained by forming the ratio

$$\frac{N}{S_M}\ ,$$

in which N represents the overall neutron emission produced by this waste for the predetermined

volume and $S_M$ represents the specific neutron emission of the plutonium for the compound in question.

5. Apparatus for determining the volume and/or specific activity and for estimating the mass of plutonium contained in the waste from a reprocessing plant for fuel, so that the only neutron emission source is plutonium, characterized in that it comprises at least one detector element (2) able to detect all the neutrons, no matter what their origins, emitted by the said waste, the detector element being arranged in such a way that any point of the waste sees the detector element under a substantially constant solid angle ($\alpha$), and a scaler (4) connected to an output of the detector for counting the neutrons received by the latter.

6. Apparatus according to claim 5, characterized in that it comprises a plurality of detector elements (2) arranged in such a way that the sum of the solid angles ($\alpha_1$, $\alpha_2$, $\alpha_3$, $\alpha_4$...) under which the waste is seen by the detectors is substantially constant, the scaler (4) being connected to the outputs of the detectors (2).

7. Apparatus according to either of the claims 5 or 6, characterized in that the scaler (4) comprises a counter (5) able to count over a predetermined time period.

8. Apparatus according to either of the claims 5 and 6, characterized in that each detector element (2) is wholly or partly surrounded by a neutron moderating wall (9).

9. Application of the process according to claim 7 to the determination of the volume and/or specific activity and to the estimation of the plutonium mass in the combustion waste of a light water nuclear reactor.

## Patentansprüche

1. Verfahren zur Bestimmung der Volumenaktivität und/oder der Massenaktivität und zur Abschätzung der in Abfällen enthaltenen Plutoniummenge, die von einer Wiederaufarbeitungsfabrik von Brennelementen stammen, so daß die einzige Neutronenstrahlungsquelle das Plutonium ist, dadurch gekennzeichnet, daß es darin besteht, einzig die Gesamtneutronenemission des Plutoniums und seiner Verbindungen zu messen, wie auch die isotopische Zusammensetzung des Plutoniums sein mag, wobei diese Neutronenemission im wesentlichen konstant ist.

2. Verfahren nach Anspruch 1, dadurch gekennzeichnet, daß die Volumenaktivität n der Abfälle, ausgedrückt in der Anzahl der zulässigen Gesamtkonzentrationen (CMA) dadurch erhalten wird, daß man das Verhältnis N/Sn ermittelt, in welchem N die von diesen Abfällen pro vorbestimmtes Volumen erzeugte Gesamtneutronenemission darstellt und Sn die Neutronenemission entsprechend einer in diesem vorbestimmten Volumen maximal zulässigen Konzentration darstellt.

3. Verfahren nach Anspruch 1, dadurch gekennzeichnet, daß die Massenaktivität der Abfälle, ausgedrückt in Curie pro Tonne, dadurch erhalten wird, daß man das Verhältnis N/m.Sa ermittelt, in welchem N die von diesen Abfällen für das vorbestimmte Volumen erzeugte Gesamtneutronenemission darstellt, m die Masse dieser Abfälle darstellt, Sa die Neutronenemission des Plutoniums für die betreffende Verbindung für eine Aktivität von 1 Curie darstellt.

4. Verfahren nach Anspruch 1, dadurch gekennzeichnet, daß die in den ein vorbestimmtes Volumen einnehmenden Abfällen enthaltene Plutoniummasse dadurch erhalten wird, daß das Verhältnis N/$S_M$ ermittelt wird, in welchem N die von diesen Abfällen für das vorbestimmte Volumen erzeugte Gesamtneutronenemission darstellt und $S_M$ die Massenneutronenemission des Plutoniums für die betreffende Verbindung darstellt.

5. Vorrichtung zur Bestimmung der Volumenaktivität und/oder der Massenaktivität und zur Abschätzung der Plutoniummenge, die in Abfällen enthalten ist, die von einer Brennelementewiederaufarbeitungsfabrik stammen, so daß die einzige Neutronenemissionsquelle das Plutonium ist, dadurch gekennzeichnet, daß sie wenigstens ein Detektorelement (2) enthält, das in der Lage ist, alle Neutronen zu ermitteln, gleichgültig, was ihr Ursprung sei, die von diesen Abfällen abgegeben werden, wobei diese Neutronenemission im wesentlichen konstant ist, wobei dieses Detektorelement derart angeordnet ist, daß jeder Punkt der Abfälle das Detektorelement unter einem praktisch konstanten festen Winkel ($\alpha$) sieht, und ein Strahlenzählgerät (4) aufweist, das mit einem Ausgang des Detektors verbunden ist, um die von diesem aufgenommenen Neutronen zu zählen.

6. Vorrichtung nach Anspruch 5, dadurch gekennzeichnet, daß sie mehrere Detektorelemente (2) enthält, die derart angeordnet sind, daß die Summe der festen Winkel ($\alpha_1$, $\alpha_2$, $\alpha_3$, $\alpha_4$,...), unter welchen die Abfälle von den Detektoren gesehen werden, praktisch konstant ist, wobei das Strahlenzählgerät (4) mit den Ausgängen der Detektoren (2) verbunden ist.

7. Vorrichtung nach einem der Ansprüche 5 und 6, dadurch gekennzeichnet, daß das Strahlenzählgerät (4) einen Zähler (5) enthält, der in der Lage ist, auf der Basis einer vorgegebenen Zeit zu zählen.

8. Vorrichtung nach einem der Ansprüche 5 und 6, dadurch gekennzeichnet, daß jedes Detektorelement (2) teilweise oder vollständig von einem Neutronenbremsschirm (9) umgeben ist.

9. Anwendung des Verfahrens nach Anspruch 7 bei der Bestimmung der Volumenaktivität und/oder der Massenaktivität und der Abschätzung der Plutoniummenge in Verbrennungsabfällen eines Leichtwasser-Kernreaktors.

EMISSION (n.s⁻¹.fût⁻¹)   MASSE Pu (Grammes.Fût⁻¹)   -PWR-   ACTIVITÉ (α+β)en Ci.g⁻¹ de Pu   CMA (en Ci.m⁻³)

FIG. 1

ACTIVITÉ

EMISSION

CMA

MASSE

COMBUSTION MASSIQUE (MW.J.T⁻¹)

EP 0 130 099 B1

-BWR-

FIG. 2

EP 0 130 099 B1

FIG. 3

FIG. 4

Vers 3

FIG. 6

α2

α3

α1

α4

1

2

2

FIG. 5

2

3

4

6

5

11

14

13

12